# EUROPÄISCHE PATENTSCHRIFT

(11) **EP 3 170 439 B1**
(45) Veröffentlichungstag und Bekanntmachung des Hinweises auf die Patenterteilung: **08.07.2020**
(21) Anmeldenummer: 16196177.6
(22) Anmeldetag: 28.10.2016
(51) Int. Cl.: A47L 15/42, A47L 15/48

(54) **GESCHIRRSPÜLMASCHINE MIT EINER WÄRMEPUMPENEINRICHTUNG**
DISHWASHER WITH A HEAT PUMP DEVICE
LAVE-VAISSELLE COMPRENANT UN DISPOSITIF DE POMPE À CHALEUR

(30) Priorität: 20.11.2015 DE 102015222971
(43) Veröffentlichungstag der Anmeldung: 24.05.2017
(73) Patentinhaber: BSH Hausgeräte GmbH, 81739 München (DE)
(72) Erfinder: Balerdi Azpilicueta, Pilar, 31272 Barindano (ES); Casado Carlino, Sergio, 31621 Sarriguren (ES); Heinle, Martin, 89353 Glött (DE); Lopez Pascual, Maria Yolanda, 20500 Mondragón (ES); Merino Alcaide, Eloy, 31621 Sarriguren (ES); Mugica Odriozola, Roman Ladislao, 20570 Bergara (ES); Paintner, Kai, 86465 Welden (DE); Riedinger, Jochen, 89407 Dillingen (DE); Urdiain Yoldi, Koldo, 31240 Ayegui (ES)

(56) Entgegenhaltungen:
- EP-A2- 2 193 741
- EP-A2- 2 322 072
- DE-B3-102013 224 151
- JP-A- 2007 125 198
- SE-C2- 537 508

## Beschreibung

Die vorliegende Erfindung betrifft eine Geschirrspülmaschine mit einem Spülbehälter für Spülgut und mit einer Wärmepumpeneinrichtung nach dem Oberbegriff des Anspruchs 1.

Aus der SE 537 508 C2 ist bekannt, insbesondere während einer Trocknungsphase des im Spülbehälter gehaltenen Spülguts heiße und feuchte Luft aus dem Spülbehälter in einen extern gelegenen Luftführungsraum anzusaugen und die Feuchtigkeit aus dieser Luft an einer kalten Fläche abkühlen zu lassen, ehe die so getrocknete und gekühlte Luft wieder an anderer Stelle in den Spülbehälter zurückgeblasen wird. Dabei wird während der Lufttrocknung ein Verdampfermedium aufgeheizt, das seine Wärme bei seiner Kondensation an anderer Stelle wieder zur Vorheizung der Luft abgeben kann, so dass diese als getrocknete und vorgeheizte Luft ein weiteres Mal den Spülbehälter durchlaufen und durch die Vorheizung ein hohes Maß an dort noch vorhandener Feuchtigkeit aufnehmen kann, ehe eine Sättigung eintritt.

Diese Trocknung soll mit einer möglichst hohen Effektivität bei geringem Energieeinsatz von außen und in kurzer Zeit ablaufen. Gleichzeitig sind die Platzverhältnisse in einer Geschirrspülmaschine so, dass die Energieeffizienz nicht zu Lasten des im Spülbehälter verbleibenden Raums gehen soll.

Wenn sich der (üblicherweise Rohrabschnitte umfassende) Verdampfer im Innern des Wasserführungsraums befindet, sind durch die Abkühlung des Wassers die Rohrabschnitte häufig von Eis umgeben, wenn der Spülprogrammablauf den Teilprogrammschritt "Trocknen" einleitet. An der Trennwand zwischen Luftführungsraum und Wasserführungsraum wird beim Kondensieren dann zwar Wärme frei, diese Wärme kann aber wegen der thermischen Isolierung durch das Eis nicht zu den Rohrabschnitten des Verdampfers gelangen, sondern führt nur zum Auftauen der Anteile des Eises, die sich in unmittelbarer Nähe zur Trennwand befinden. Ein Einschalten der Wärmepumpe während des Trocknungsprogramms ist daher nicht zielführend, und ein Aufheizen der kalten, an der Trennwand entfeuchteten Luft ist durch die Wärmepumpe nicht möglich.

Der Einsatz einer elektrischen Zusatzheizung wäre zwar möglich, wäre aber energetisch und bezüglich des Bauteile-Aufwands nicht effektiv.

Der Erfindung liegt das Problem zugrunde, die Einsatzmöglichkeiten einer Wärmepumpe in der Geschirrspülmaschine zu verbessern.

Die Erfindung löst das Problem durch eine Geschirrspülmaschine mit den Merkmalen des Anspruchs . Hinsichtlich weiterer vorteilhafter Ausgestaltungen und Merkmale der Erfindung wird auf die Ansprüche 2 bis 15 verwiesen.

Dadurch, dass eine Geschirrspülmaschine nach dem Anspruch 1 einen Luftführungsraum umfasst, durch den zumindest zeitweise Luft aus dem Spülbehälter leitbar und anschließend in den Spülbehälter rückführbar ist, und weiter einen dem Luftführungsraum benachbart gelegenen Wasserführungsraum mit einem Kontakt zum Luftführungsraum und weiter einen Verdampfer umfasst, durch den Medium leitbar und dadurch Wasser im Wasserführungsraum thermisch beeinflussbar ist, wobei Wasserführungsraum und Luftführungsraum durch eine Zwischenwand voneinander getrennt sind, der Rohrabschnitte des Verdampfers derart zugeordnet sind, dass diese zu der Zwischenwand spaltfrei gehalten sind, ist eine Verbesserung der Wärmeübertragung zwischen Luftführungsraum und Verdampfer erreicht. Insbesondere ist einer Vereisung im Wärmeübergangsraum vorgebeugt, so dass sich keine isolierende Eisschicht bilden kann und Wärme aus der Luft effektiv bis in das Medium des Verdampfers, insbesondere eines Rohrverdampfers, gelangen kann. Eine Zusatzheizung ist damit idealerweise nicht erforderlich oder benötigt, sofern vorhanden, deutlich weniger Einschaltzeit und damit Energieverbrauch.

Diese Effektivität der Wärmeübertragung ist besonders hoch, wenn die Rohrabschnitte des Verdampfers über zumindest nahezu die gesamte Länge des Verdampfers spaltfrei zur Zwischenwand gehalten sind. Insbesondere können sie integral in der Zwischenwand verlaufen. Beispielsweise können sie für eine einfache Fertigung in einer Roll-Bond-Technologie in die Zwischenwand integriert sein.

Ein besonders guter Wärmeaustausch ist bei einer großen Kontaktfläche gegeben, die erreicht werden kann, indem die Rohrabschnitte des Verdampfers mäandrierend über die Fläche der Zwischenwand verlaufen.

Weiter ist es möglich, dass die Rohrabschnitte auf der dem Wasserführungsraum zugewandten Seite direkt auf die Zwischenwand aufgebracht sind, also spaltfrei auf der Zwischenwand liegen, ohne direkt in einen Hohlraum dieser Zwischenwand integriert zu sein. Hierfür können fertigungstechnisch einfach die Rohrabschnitte über eine Tube-on-Sheet-Technologie auf die Zwischenwand aufgebracht sein.

Günstig ist die Luft aus dem Spülbehälter mit einer abwärts weisenden Komponente durch den Luftführungsraum leitbar, um dadurch die im Spülbehälter aufsteigende warme Luft an einem hohen Punkt aus diesem abführen zu können und sie nach ihrer Kühlung unten wieder in den Spülbehälter einleiten zu können.

Dabei ist es hilfreich, wenn das Wärmeübertragungsmedium des Verdampfers im Gegenstromprinzip zu der Luft aus dem Spülbehälter mit einer aufwärts weisenden Komponente durch den Verdampfer leitbar ist, so dass es sich auf seinem Weg nach oben hin immer weiter aufheizt.

Erfindungsgemäß ist bei einer Geschirrspülmaschine nach dem Anspruch 1, die einen Luftführungsraum umfasst, durch den zumindest zeitweise Luft aus dem Spülbehälter leitbar und anschließend in den Spülbehälter rückführbar ist, und die weiter einen Wasserführungsraum umfasst, der dem Luftführungsraum benachbart gelegen ist und einen, insbesondere thermisch gut leitenden, großflächigen Kontakt zu diesem aufweist, und die einen Verdampfer umfasst, durch den Wärmetransportmedium leitbar und dadurch Wasser im Wasserführungsraum und/oder Luft im Luftführungsraum thermisch beeinflussbar ist, dadurch, dass Wasserführungsraum und Luftführungsraum als gemeinsamer, flacher Doppeltank ausgebildet sind, deren Räume durch eine Zwischenwand voneinander getrennt sind, der Rohrabschnitte des Verdampfers zugeordnet sind, eine besonders kompakte, schmale Bauform erreicht, die seitlich neben dem Spülbehälter plaziert werden kann, ohne dass der Spülbehälter hierfür in seinem Volumen eingeschränkt werden müsste. Auch fertigungstechnisch ist ein solcher flacher Doppeltank einfach herstellbar, zum Beispiel durch Spritzguss-Außenwandungen.

Sofern der Doppeltank eine Dicke von zwei Zentimetern bis sechs Zentimetern aufweist, ist es gut möglich, ihn aufrecht neben den Spülbehälter zu stellen.

Besonders vorteilhaft kann der Luftführungsraum mit über seine Dicke im wesentlichen durchgehenden Stegführungen zur Ausbildung einer Mäanderführung für den Luftstrom versehen sein, so dass dieser zwangsläufig während seiner Abwärtsbewegung in einen geordneten, mäandrierenden Verlauf mit einem zeitlich langen Kontakt zur Zwischenwandung gezwungen wird.

Fertigungstechnisch günstig, insbesondere für eine Spritzgussfertigung, können die Stegführungen einstückiger Bestandteil der Außenwand des Luftführungsraums sein.

Gleichzeitig können in Doppelfunktion die Stegführungen sich zumindest teilweise, insbesondere auch vollständig, über die ganze Dicke des Luftführungsraums erstrecken und so im Betrieb Abstützungen gegen ein Auswölben der Zwischenwand ausbilden, indem sie bei ihrer Erstreckung bis zur Zwischenwand diese in ihrer an den Stegführungen anlehnenden Stellung halten.

Sofern der Wasserführungsraum einen Frischwasseranschluss aufweist und während eines Spülgangs mehrfach mit Frischwasser neu befüllbar ist, wobei dieses Frischwasser nach Durchgang durch den Wasserführungsraum an den Spülbehälter abgebbar ist, kann ein separater Tank zum Aufheizen von Spülwasser entbehrlich sein. Im Idealfall ist die Wärmepumpe ausreichend zur Aufheizung des Spülwassers in der jeweiligen Phase des Spülgangs.

Weitere Vorteile und Merkmale ergeben sich aus in der Zeichnung dargestellten und nachfolgend beschriebenen Ausführungsbeispielen des Gegenstandes der Erfindung.

In der Zeichnung zeigt:
- Fig. 1: eine schematische perspektivische Ansicht von schräg vorne einer Ausführungsform einer Geschirrspülmaschine mit einer
- Fig. 2: eine schematische, blockschaltbildartige Ansicht der Geschirrspülmaschine, wobei an der linken Seite der Spülbehälter gegen den außen liegenden Wasserführungsraum thermisch isoliert ist und an der rechten Seite eine Luftleitung aus dem Spülbehälter in einen Luftführungsraum führt, der thermisch mit dem dort befindlichen Wasserführungsraum verbunden ist,
- Fig. 3: eine schematische perspektivische Ansicht eines Spülbehälters mit einem einen Wärmetauscher bildenden Doppeltank außerhalb einer rechten Seitenwand,
- Fig. 4: eine beispielhafte Ansicht einer Zwischenwand des Doppeltanks, vom Wasserführungsraum aus gesehen, mit einem Rohrleitungssystem, das über eine Tube-on-Sheet-Technik aufgebracht wurde,
- Fig. 5: eine beispielhafte Ansicht einer Zwischenwand des Doppeltanks, vom Wasserführungsraum aus gesehen, mit einem Rohrleitungssystem, das über eine Roll-bond-Technik in die Zwischenwand integriert wurde,
- Fig. 6: eine schematische Darstellung und ihrer Umlaufzyklen, wobei gestrichelte Linien gegenüber gepunkteten eine größere Wärme bedeuten,
- Fig. 7: den Doppeltank in schematischer Querschnittsansicht,
- Fig. 8: den Doppeltank in perspektivischer Ansicht von außen.

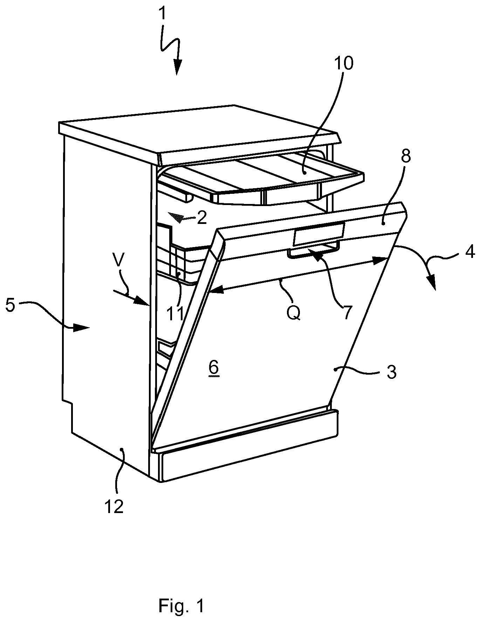

Die in Figur 1 schematisch dargestellte Geschirrspülmaschine 1 ist eine Haushaltsgeschirrspülmaschine und weist als Bestandteil eines Korpus' 5 einen Spülbehälter 2 zur Aufnahme von zu bearbeitendem Spülgut wie Geschirr, Töpfen, Bestecken, Gläsern, Kochutensilien u. ä. auf. Das Spülgut kann dabei zum Beispiel in Geschirrkörben 11 und/oder einer Besteckschublade 10 halterbar und dabei von Spülflotte beaufschlagbar sein. Der Spülbehälter 2 kann einen zumindest im Wesentlichen rechteckigen Grundriß mit einer in Betriebsstellung einem Benutzer zugewandten Vorderseite V aufweisen. Diese Vorderseite V kann dabei einen Teil einer Küchenfront aus nebeneinander stehenden Küchenmöbeln bilden oder bei einem allein stehenden Gerät auch ohne Bezug zu weiteren Möbeln sein.

Der Spülbehälter 2 ist insbesondere an dieser Vorderseite V von einer Tür 3 verschließbar. Diese Tür 3 ist in Figur 1 in teilweise geöffneter und dann schräg zur Vertikalen stehenden Stellung gezeigt. In ihrer Schließstellung steht sie hingegen aufrecht und ist gemäß der Zeichnung zu ihrer Öffnung um eine untere Horizontalachse nach vorne und unten in Richtung des Pfeils 4 aufschwenkbar, so dass sie in vollständig geöffneter Stellung zumindest nahezu horizontal liegt.

An ihrer in Schließstellung vertikalen, dem Benutzer zugewandten Außen- und Vorderseite V kann die Tür 3 mit einer Dekorplatte 6 versehen sein, um damit eine optische und/oder haptische Aufwertung und/oder eine Anpassung an umliegende Küchenmöbel zu erfahren.

Der Geschirrspülmaschine 1 ist hier als allein stehendes oder als sog. teilintegriertes oder auch als voll integriertes Gerät ausgebildet. Im letztgenannten Fall kann der Korpus 5 auch im Wesentlichen mit den Außenwandungen des Spülbehälters 2 abschließen. Ein diesen außen umgebendes Gehäuse kann dann zumindest im oberen Bereich entbehrlich sein. Im unteren Bereich ist ein Sockel 12 vorgesehen, in dem Raum für die Anordnung mehrerer Funktionselemente ist.

Der beweglichen Tür 3 ist im Ausführungsbeispiel gemäß der Zeichnung in ihrem oberen Bereich eine in Querrichtung Q der Geschirrspülmaschine 1 erstreckte Bedienblende 8 zugeordnet, die eine von der Vorderseite V zugängliche Eingriffsöffnung 7 zum manuellen Öffnen und/oder Schließen der Tür 3 umfassen kann. In Querrichtung Q hat die Geschirrspülmaschine häufig eine Erstreckung von 50 oder 60 Zentimetern. In Tiefenrichtung von der Vorderseite V nach hinten liegt die Erstreckung häufig ebenfalls bei etwa 60 Zentimetern. Die Werte sind nicht zwingend.

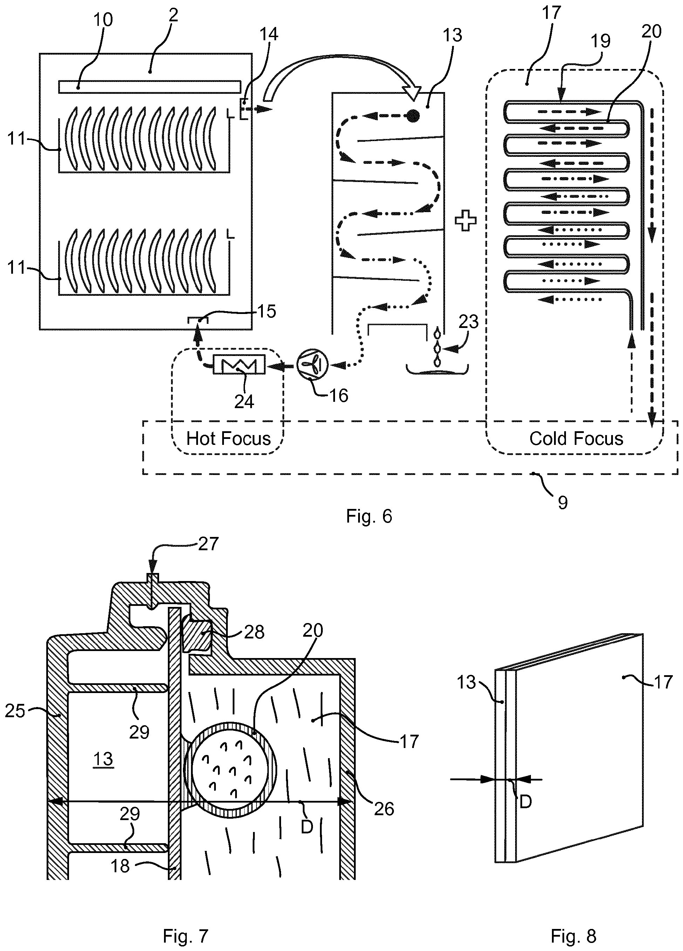

Des Weiteren ist die Geschirrspülmaschine 1 hier mit zumindest einer Wärmepumpeneinrichtung 9 versehen, deren Bestandteile beispielsweise in Figur 6 gut erkennbar sind. Für einen effektiven Betriebe dieser Wärmepumpe 9 umfasst die Geschirrspülmaschine 1 zumindest einen - hier genau einen - Luftführungsraum 13, durch den zumindest zeitweise Luft von einem Auslass 14 aus dem Spülbehälter leitbar und anschließend nach Durchlaufen des Luftführungsraums 13 über einen Einlass 15 in den Spülbehälter rückführbar 2 ist, wobei insbesondere zur Luftbewegung zumindest ein Gebläse 16 vorgesehen ist. Neben dem zumindest einen Luftführungsraum 13 ist benachbart ein Wasserführungsraum 17 gelegen, der einen thermisch gut leitenden, großflächigen Kontakt über eine Zwischenwandung 18 zum Luftführungsraum 13 aufweist und einen Verdampfer 19 umfasst, durch den Wärmetransportmedium leitbar ist. Dadurch ist Wasser im Wasserführungsraum 17 und/oder Luft im Luftführungsraum 13 thermisch beeinflußbar. Auf diese Weise ist ein Wärmetauscher gebildet, dessen Außenwandungen 25, 26 parallel zur Seitenwandung 21 des Spülbehälters 2 stehen.

Die den Wasserführungsraum 17 und den Luftführungsraum 13 voneinander trennende Zwischenwandung 18 ist so ausgebildet, dass dieser Rohrabschnitte 20 des Verdampfers 19 zugeordnet sind, und zwar derart, dass diese zu der Zwischenwand 18 spaltfrei gehalten sind, so dass zwischen der Zwischenwand 18 und den Rohrabschnitten 20 kein Wasser im Wasserführungsraum 17 durchlaufen kann. Insbesondere ist die Zwischenwand 18 metallisch ausgebildet, um damit eine flächig gute Wärmeleitung zu ermöglichen. Auch thermisch gut leitende Kunststoffe sind für die Zwischenwand 18 grundsätzlich möglich. Die Anbindung der Rohrabschnitte 20 an die Zwischenwand 18 erfolgt dabei ebenfalls thermisch gut leitend, zum Beispiel über ein Anlöten. Die Zwischenwand 18 ist dabei so großflächig wie irgend möglich erstreckt, um für die thermische Leitung eine möglichst große Kontaktfläche ausbilden zu können.

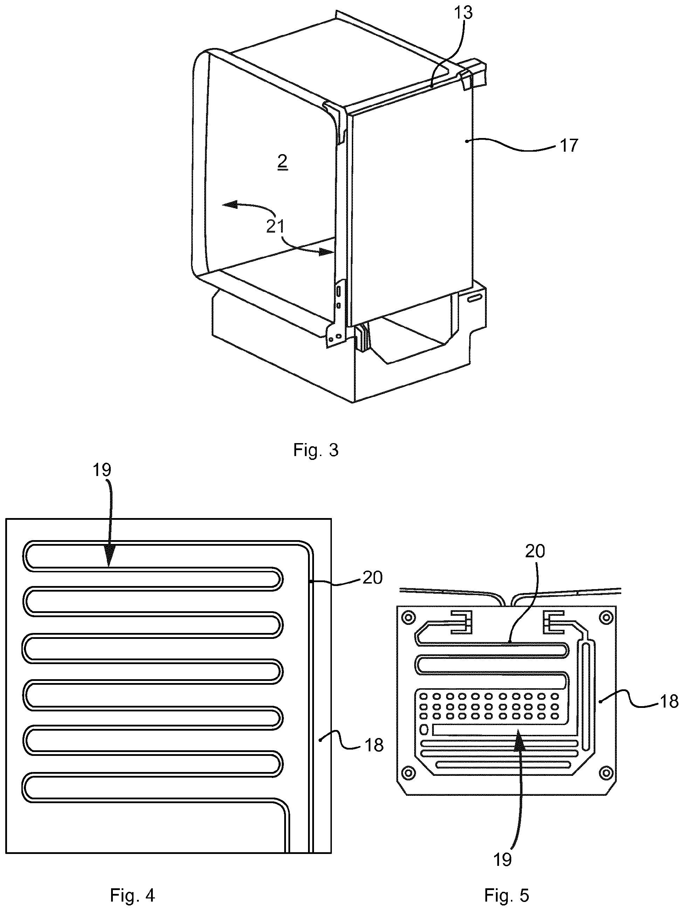

Insbesondere sind, wie in den Figuren 4 und 5 gezeigt ist, die Rohrabschnitte 20 des Verdampfers 19 über zumindest nahezu ihre gesamte Länge spaltfrei zur Zwischenwand 18 gehalten, so dass idealerweise über die gesamte Zwischenwand 18 keine Zone gebildet ist, an der Wasser zwischen der Zwischenwand 18 und einem Rohrabschnitt 20 des Verdampfers 19 entlangfließen könnte. Entsprechend würde auch eine Vereisung im Bereich der Rohrabschnitte 20 nicht in diesem Raum stattfinden können und somit auch keine Isolierungsschicht zwischen den Rohrabschnitten 20 und der Zwischenwand 18 aufbauen können.

Wie in den genannten Figuren weiter erkennbar ist, laufen die Rohrabschnitte 20 des Verdampfers 19 insbesondere mäandrierend über die Fläche der Zwischenwand 18, um damit eine großflächige Wärmeübertragung zu ermöglichen.

In Figur 5 ist erkennbar, dass die Rohrabschnitte 20 des Verdampfers 19 in einer ersten Ausbildung integral in der Zwischenwand 18 verlaufen. Hierfür sind beispielhaft die Rohrabschnitte 20 in einer Roll-Bond-Technologie in die Zwischenwand 18 integriert und somit ohne eigene gesonderte Wandungen als einstückiger Bestandteil der Zwischenwand 18 ausgebildet.

Gemäß einer zweiten Ausführung nach Figur 4 und Figur 7 sind die Rohrabschnitte 20 auf der dem Wasserführungsraum 17 zugewandten Seite direkt auf die Zwischenwand 18 aufgebracht, zum Beispiel über eine Tube-on-Sheet-Technologie. Auch hier ist ein Wasserdurchfluss - und entsprechend eine Vereisung - zwischen den Rohrabschnitten 20 und der Zwischenwand 18 verhindert.

Zwischen dem an einer Seitenwandung 21 befindlichen Auslass 14 aus dem Spülbehälter 2 und dem hier unterseitigen Einlass 15 ist die Luft aus dem Spülbehälter 2 mit einer abwärts weisenden Komponente durch den Luftführungsraum 13 leitbar, insbesondere mit Hilfe des Gebläses 16. Dadurch kann oben die warme, feuchte Luft aus dem Spülbehälter 2 abgesaugt werden ist. Diese Luft bleibt über den Luftführungsraum 13 in einem geschlossenen Kreislauf bis zum Wiedereinlass 15 in den Spülbehälter 2.

Das Wärmetransportmedium hingegen wird im Gegenstromprinzip zur der Luft mit einer aufwärts weisenden Komponente durch den Verdampfer 19 geleitet. Dadurch ist das Wärmetransportmedium im unteren Bereich besonders kalt und wärmt sich nach oben hin durch die von oben einströmende warme Luft (mittleres Bild in Figur 6) auf (rechtes Bild in Figur 6).

Der Doppeltank aus Luftführungsraum 13 und Wasserführungsraum 17 mit dem Verdampfer 19 bildet dadurch einen Wärmetauscher 22 (Heat Exchanger) aus. Der Begriff Doppeltank ist nicht so zu verstehen, dass der Inhalt statisch gespeichert wäre, sondern sowohl die Luft im Luftführungsraum 13 als auch das Wasser im Wasserführungsraum 17 als auch das Wärmetransportmedium im Verdampfer 19 sind zumindest während einer Aufheizungsphase des Spülwassers und während einer Trocknungsphase zumindest teilweise in Bewegung, insbesondere im Gegenstromprinzip zueinander.

Mit der Erfindung ist ein aktives Trocknungskonzept ermöglicht. Durch den geschlossenen Kreislauf der zwangsbewegten Luft (Gebläse 16) wird die Luft im Trocknungsverfahren für das Spülgut auf etwa 35 °C gehalten. Dabei wird die angesaugte und zunächst sehr feuchte Luft aus dem Spülbehälter 2 im Cold-Focus mit dem Wasserführungsraum 17 an der kalten Zwischenwand 18 entlanggeführt, so dass dort Wasser 23 auskondensieren kann und nach unten abgeleitet wird. Anschließend wird die so getrocknete Luft über einen oder mehrere Kondensatoren (auch Verflüssiger genannt) 24 der Wärmepumpe 9 geleitet und wieder dem Einlass 15 zugeführt, um so durch die hohe Temperatur wieder ein hohes Maß an Feuchtigkeit aus dem Spülbehälter 2 abführen zu können. Dabei kann ein erster Verflüssiger 24a der Luftzuleitung zum Einlass 15 vorgeordnet sein, ein zweiter möglicher Verflüssiger 24b kann insbesondere als offener Rohrkondensator im unteren Bereich des Innenraums des Spülbehälters 2 mit Abstand zum Boden des Spülbehälters 2 angeordnet sein.

Hier sind gemäß Anspruch 10 der Wasserführungsraum 17 und der Luftführungsraum 13 als gemeinsamer, flacher Doppeltank ausgebildet, deren Räume durch eine thermisch leitfähige Zwischenwand 18 voneinander getrennt sind, wobei der Zwischenwand 18 Rohrabschnitte 20 des Verdampfers 19 zugeordnet sind. Diese Zuordnung kann insbesondere in der oben beschriebenen Weise erfolgen und dadurch eine thermisch gut leitende Anbindung der Rohrabschnitte 20 des Verdampfers 19 an die Zwischenwand 18 sicherstellen. Der Wasserführungsraum 17 kann alternativ auch mit einem PCM-Slurry befüllt sein. In jedem Fall ist dort ein Medium enthalten, das bei den sich ändernden Temperaturen während des Programmablaufs der Geschirrspülmaschine 1 einen Phasenwechsel durchführen kann.

Hier sind die Außenwandungen 25, 26 des Doppeltanks (Figur 7) vorteilhaft aus Kunststoff gebildet, insbesondere als Spritzgußteile, die an der Nahtlinie 27 aneinander angeschmolzen sein können.

Der Doppeltank mit den beiden Führungsräumen 13, 17 weist insgesamt vorzugsweise eine Dicke D von 3 Zentimetern bis 6 Zentimetern aufweist, so dass er außen neben der Seitenwandung 21 platziert werden kann, ohne die Breite der Geschirrspülmaschine 1 in Querrichtung Q zu überschreiten. Außenseitig der gegenüberliegenden Seitenwandung 21 ist hier beispielhaft ebenfalls ein Wasserführungsraum 17 mit einem Verdampfer 19 als Teil der Wärmepumpe 9 ausgebildet. Auf dieser Seite ist der Wasserführungsraum 17 mit dem Verdampfer 19 jedoch durch eine Isolierschicht 30 vom Spülbehälter getrennt, bildet somit keinen Doppeltank aus. Es ist dabei nicht zwingend, den Wasserführungsraum 17 auf zwei Seiten zu verteilen, ermöglicht jedoch, dass die außen neben den Seitenwandungen 21 zur Verfügung stehende Raum optimal genutzt wird, ohne dass der Spülbehälter 2 verkleinert werden muss.

Dabei weist der flache und großflächige Doppeltank 13, 17 in Draufsicht zweckmäßigerweise eine Rechteckform mit Kantenlängen vorzugsweise zwischen 30 und ca. 60 Zentimetern auf, kann also so nahezu über die gesamte Höhe und Tiefe des Spülbehälters 2 erstreckt sein, um so die Tiefe (ca. 50 bis 60 Zentimeter) und Höhe des Behälters (ca. 60 bis 70 Zentimeter) gut ausnutzen zu können. Insbesondere können Tiefe und Höhe des Doppeltanks ähnlich groß sein, so dass sich in Ansicht von der Seite eine mehr oder minder quadratische Fläche ergibt, die den zur Verfügung stehenden Raum optimal ausnutzt. Hier weist beispielhaft der Doppeltank eine Höhe von 590 Millimetern und eine Tiefe von 425 Millimetern auf. Die Gesamtdicke D liegt insbesondere bei 25 Millimetern, wobei die Dicke des Luftführungsraums 13 ca. 5 Millimeter und die Dicke des Wasserführungsraums ca. 16 Millimeter beträgt. Damit ergibt sich ein Volumen des Luftführungsraums 13 von 1,05 Litern und ein Volumen des Wasserführungsraums 17 von 3,3 Litern.

Jenseits der gegenüberliegenden Seitenwand hat der dort stehende weitere Wasserführungsraum 17 beispielsweise ebenfalls eine Tiefe von 425 Millimetern und eine Höhe von 590 Millimetern, kann jedoch 25 Millimeter dick sein, da dort kein Luftführungsraum vorhanden ist. Das Wasservolumen dort liegt dann bei etwa 2,7 Litern.

Wie in Figur 6 und Figur 7 erkennbar ist, kann der Luftführungsraum 13 mit über seine Dicke im Wesentlichen durchgehenden Stegführungen 29 zur Ausbildung einer Mäanderführung für den Luftstrom versehen sein. Diese sind insbesondere einstückiger Bestandteil der Außenwand 25 des Luftführungsraums 13 und können einstückig mit dieser gespritzt sein. Die Stegführungen 29 erstrecken sich bei der hier gewählten geometrischen Anordnung zumindest ungefähr in Querrichtung Q der Geschirrspülmaschine 1.

Dabei bilden die Stegführungen 29 nicht nur (Figur 6) Führungen für die Luftströmung aus, sondern bilden in Doppelfunktion im Betrieb Abstützungen gegen ein Auswölben der Zwischenwand 18 aus, so dass diese (Figur 7) formstabil zwischen flanschartigen Haltebereichen der Außenwandungen 25, 26 gehalten ist und auf der Wasserführungsseite, die den Stegen 29 abgewandt ist, gegen eine insbesondere gummielastische und vollständig um den Rand der Zwischenwand 18 laufende Dichtungslinie 28 gedrückt ist. Durch diese Dichtungslinie 28 ist die Wasserdichtigkeit zwischen dem Luftführungsraum 13 und dem Wasserführungsraum 17 gewährleistet.

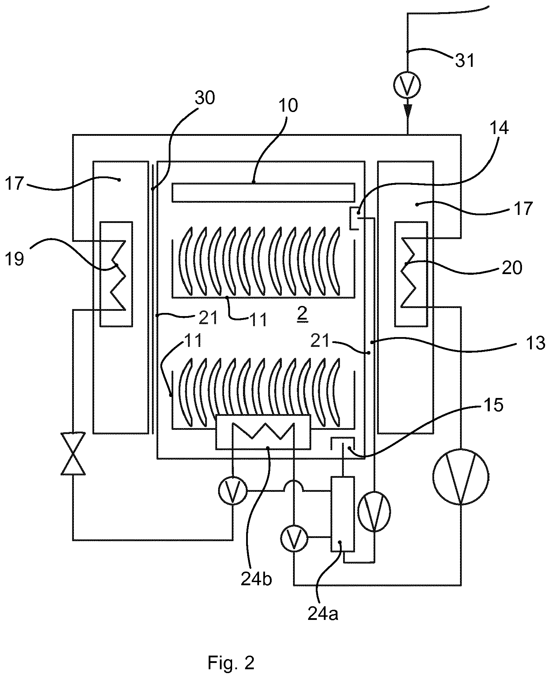

Wie in Figur 2 gut sichtbar ist, weist der Wasserführungsraum 17 einen Frischwasseranschluss 31 auf und ist während eines Spülgangs mehrfach mit Frischwasser neu befüllbar, wobei dieses Frischwasser nach Durchgang durch den Wasserführungsraum in Spülphasen des Programmablaufs an den Spülbehälter 2 abgebbar ist.

### Bezugszeichenliste

- 1: Geschirrspülmaschine,
- 2: Spülbehälter,
- 3: Tür,
- 4: Öffnungsrichtung,
- 5: Korpus,
- 6: Dekorplatte,
- 7: Griffmulde,
- 8: Bedienblende,
- 9: Wärmepumpeneinrichtung,
- 10: Besteckschublade,
- 11: Geschirrkorb,
- 12: Sockel,
- 13: Luftführungsraum,
- 14: Auslass aus dem Spülbehälter,
- 15: Einlass in den Spülbehälter,
- 16: Gebläse,
- 17: Wasserführungsraum,
- 18: Zwischenwandung,
- 19: Verdampfer,
- 20: Rohrabschnitte,
- 21: Seitenwandung,
- 22: Wärmetauscher,
- 23: Wasser,
- 24: Kondensator (Verflüssiger),
- 24a: erster Verflüssiger,
- 24b: zweiter Verflüssiger,
- 25: Außenwandung,
- 26: Außenwandung,
- 27: Nahtlinie,
- 28: Dichtung,
- 29: Stegführungen,
- 30: Isolierschicht,
- 31: Frischwasseranschluss,

- Q: Querrichtung,
- D: Dicke des Doppeltanks

## Patentansprüche

1. Geschirrspülmaschine (1), insbesondere Haushaltsgeschirrspülmaschine, mit einem Spülbehälter (2) zur Reinigung von Geschirr, Gläsern, Bestecken oder ähnlichem Spülgut und mit zumindest einer Wärmepumpe (9), wobei die Geschirrspülmaschine (1) einen Luftführungsraum (13), durch den zumindest zeitweise Luft aus dem Spülbehälter (2) leitbar und anschließend in den Spülbehälter (2) rückführbar ist, und weiter einen Wasserführungsraum (17) aufweist, der dem Luftführungsraum (13) benachbart gelegen ist und einen Kontakt zu diesem aufweist, wobei dem Wasserführungsraum (17) zumindest ein Verdampfer (19) zugeordnet ist, durch den Wärmetransportmedium leitbar ist, wobei dadurch Wasser im Wasserführungsraum (17) und/oder Luft im Luftführungsraum (13) thermisch beeinflussbar ist,
**dadurch gekennzeichnet,**
**dass** der Wasserführungsraum (17) und der Luftführungsraum (13) als gemeinsamer, flacher Doppeltank ausgebildet sind, dessen Räume (13;17) durch eine Zwischenwand (18) voneinander getrennt sind, der Rohrabschnitte (20) des Verdampfers (19) derart zugeordnet sind, dass diese zu der Zwischenwand (18) spaltfrei gehalten sind,
und **dass** der Wasserführungsraum (17) einen Frischwasseranschluss (31) aufweist und während eines Spülgangs mehrfach mit Frischwasser neu befüllbar ist, wobei dieses Frischwasser nach Durchgang durch den Wasserführungsraum (17) an den Spülbehälter (2) abgebbar ist,

2. Geschirrspülmaschine (1) nach Anspruch 1,
**dadurch gekennzeichnet,**
**dass** die Rohrabschnitte (20) des Verdampfers (19) über zumindest nahezu seine gesamte Länge spaltfrei zur Zwischenwand (18) gehalten sind.

3. Geschirrspülmaschine (1) nach einem der Ansprüche 1 oder 2,
**dadurch gekennzeichnet,**
**dass** die Rohrabschnitte (20) des Verdampfers mäandrierend über die Fläche der Zwischenwand (18) verlaufen.

4. Geschirrspülmaschine (1) nach einem der Ansprüche 1 bis 3,
**dadurch gekennzeichnet,**
**dass** die Rohrabschnitte (20) des Verdampfers (19) integral in der Zwischenwand (18) verlaufen.

5. Geschirrspülmaschine (1) nach Anspruch 4,
**dadurch gekennzeichnet,**
**dass** die Rohrabschnitte (19) in einer Roll-Bond-Technologie in die Zwischenwand (18) integriert sind.

6. Geschirrspülmaschine (1) nach einem der Ansprüche 1 bis 3,
**dadurch gekennzeichnet,**
**dass** die Rohrabschnitte (20) auf der dem Wasserführungsraum (17) zugewandten Seite direkt auf die Zwischenwand (18) aufgebracht sind.

7. Geschirrspülmaschine (1) nach Anspruch 6,
**dadurch gekennzeichnet,**
**dass** die Rohrabschnitte (20) über eine Tube-on-Sheet-Technologie auf die Zwischenwand (18) aufgebracht sind.

8. Geschirrspülmaschine (1) nach einem der vorhergehenden Ansprüche,
**dadurch gekennzeichnet,**
**dass** die Luft aus dem Spülbehälter (2) mit einer abwärts weisenden Komponente durch den Luftführungsraum (13) leitbar ist.

9. Geschirrspülmaschine (1) nach Anspruch 8,
**dadurch gekennzeichnet,**
**dass** das Wärmetransportmedium im Gegenstromprinzip zur der Luft mit einer aufwärts weisenden Komponente durch den Verdampfer (19) leitbar ist.

10. Geschirrspülmaschine (1) nach einem der vorhergehenden Ansprüche,
**dadurch gekennzeichnet,**
**dass** die Außenwandungen (25; 26) des Doppeltanks aus Kunststoff gebildet sind.

11. Geschirrspülmaschine (1) nach einem der vorhergehenden Ansprüche,
**dadurch gekennzeichnet,**
**dass** der Doppeltank (13; 17) eine Dicke von 2 Zentimetern bis 6 Zentimetern aufweist.

12. Geschirrspülmaschine (1) nach einem der vorhergehenden Ansprüche,
**dadurch gekennzeichnet,**
**dass** der Doppeltank in Draufsicht eine Rechteckform mit Kantenlängen zwischen 30 und 50 Zentimetern aufweist.

13. Geschirrspülmaschine (1) nach einem der vorhergehenden Ansprüche,
**dadurch gekennzeichnet,**
**dass** der Luftführungsraum (13) mit über seine Dicke im Wesentlichen durchgehenden Stegführungen (29) zur Ausbildung einer Mäanderführung für den Luftstrom versehen ist.

14. Geschirrspülmaschine (1) nach Anspruch 13,
**dadurch gekennzeichnet,**
**dass** die Stegführungen (29) einstückiger Bestandteil der Außenwand (25) des Luftführungsraums (13) sind.

15. Geschirrspülmaschine (1) nach einem der Ansprüche 13 oder 14,
**dadurch gekennzeichnet,**
**dass** die Stegführungen (29) im Betrieb Abstützungen gegen ein Auswölben der Zwischenwand (18) ausbilden.

## Claims

1. Dishwasher (1), in particular household dishwasher, having a dishwasher cavity (2) for cleaning dishes, glasses, cutlery or similar items to be washed and having at least one heat pump (9), wherein the dishwasher (1) has an air duct cavity (13) through which at least at times air can be conducted from the dishwasher cavity (2) and can then be returned into the dishwasher cavity (2), and further has a water duct cavity (17) positioned adjacent to the air duct cavity (13) and has a contact thereto, wherein at least one evaporator (19) is assigned to the water duct cavity (17), through which evaporator heat transfer medium can be conducted, wherein water in the water duct cavity (17) and/or air in the air duct cavity (13) can be thermally influenced as a result,
**characterised in that**
the water duct cavity (17) and the air duct cavity (13) are designed as a combined, flat double tank, the cavities (13, 17) of which are separated from one another by a partition wall (18) to which pipe sections (20) of the evaporator (19) are assigned such that they are held without a gap to the partition wall (18),
and the water duct cavity (17) has a fresh-water connection (31) and can be refilled with fresh water multiple times during a wash cycle, wherein this fresh water can be discharged to the dishwasher cavity (2) after passing through the water duct cavity (17).

2. Dishwasher (1) according to claim 1,
**characterised in that**
the pipe sections (20) of the evaporator (19) are held without a gap to the partition wall (18) over at least nearly all of their length.

3. Dishwasher (1) according to one of claims 1 or 2,
**characterised in that**
the pipe sections (20) of the evaporator extend in a meandering manner over the surface of the partition wall (18).

4. Dishwasher (1) according to one of claims 1 to 3,
**characterised in that**
the pipe sections (20) of the evaporator (19) extend integrally in the partition wall (18).

5. Dishwasher (1) according to claim 4,
**characterised in that**
the pipe sections (19) are integrated into the partition wall (18) using a roll-bond technology.

6. Dishwasher (1) according to one of claims 1 to 3,
**characterised in that**
the pipe sections (20) on the side facing the water duct cavity (17) are applied directly to the partition wall (18).

7. Dishwasher (1) according to claim 6,
**characterised in that**
the pipe sections (20) are applied to the partition wall (18) using a tube-on-sheet technology.

8. Dishwasher (1) according to one of the preceding claims,
**characterised in that**
the air from the dishwasher cavity (2) can be conducted through the air duct cavity (13) with a component that points downwards.

9. Dishwasher (1) according to claim 8,
**characterised in that**
in accordance with the counter-flow principle, the heat transfer medium can be conducted, counter to the air, through the evaporator (19) with a component that points upwards.

10. Dishwasher (1) according to one of the preceding claims,
**characterised in that**
the outer walls (25, 26) of the double tank are made of plastic.

11. Dishwasher (1) according to one of the preceding claims,
**characterised in that**
the double tank (13, 17) has a thickness of 2 centimetres to 6 centimetres.

12. Dishwasher (1) according to one of the preceding claims,
**characterised in that**
in plan view the double tank has a rectangular shape with edge lengths of between 30 and 50 centimetres.

13. Dishwasher (1) according to one of the preceding claims,
**characterised in that**
the air duct cavity (13) is provided with substantially continuous tab guides (29) over its thickness in order to form a meandering guide for the air flow.

14. Dishwasher (1) according to claim 13,
**characterised in that**
the tab guides (29) are a single-piece component of the outer wall (25) of the air duct cavity (13).

15. Dishwasher (1) according to one of claims 13 or 14,
**characterised in that**
during operation, the tab guides (29) form supports to prevent bulging of the partition wall (18).

## Revendications

1. Lave-vaisselle (1), en particulier lave-vaisselle électroménager, comprenant un réservoir de lavage (2) pour le nettoyage de vaisselles, de verres, de couverts ou d'articles à laver semblables et comprenant au moins une pompe à chaleur (9), le lave-vaisselle (1) comportant un espace de circulation d'air (13), à travers lequel de l'air au moins de temps en temps venant du réservoir de lavage (2) est susceptible d'être conduit et ensuite refoulé dans le réservoir de lavage (2), et comporte encore un espace de circulation d'eau (17), situé non loin de l'espace de circulation d'air (13), et ayant contact avec celui-ci, au moins un évaporateur (19) étant associé à l'espace de circulation d'eau (17), à travers lequel le fluide caloporteur peut être conduit, l'eau dans l'espace de circulation d'eau (17) et/ou l'air dans l'espace de circulation d'air (13) pouvant ainsi être influencé par la chaleur,
**caractérisé en ce que**
l'espace de circulation d'eau (17) et l'espace de circulation d'air (13) sont réalisés comme une double cuve commune et plate dont les espaces (13; 17) sont séparés l'un de l'autre par une cloison intermédiaire (18) à laquelle des sections de tuyau (20) de l'évaporateur (19) sont associées de telle sorte que celles-ci sont maintenues sans interstice par rapport à la cloison intermédiaire (18),
et **en ce que** l'espace de circulation d'eau (17) comporte un raccord à l'eau douce (31) et peut être à plusieurs reprises de nouveau rempli d'eau douce pendant le processus de lavage, cette eau douce pouvant être fournie au réservoir de lavage (2) après passage à travers l'espace de circulation d'eau (17).

2. Lave-vaisselle (1) selon la revendication 1,
**caractérisé en ce que**
les sections de tuyau (20) de l'évaporateur (19) sont maintenues sur au moins presque toute leur longueur sans interstice par rapport à la cloison intermédiaire (18).

3. Lave-vaisselle (1) selon l'une des revendications 1 ou 2,
**caractérisé en ce que**
les sections de tuyau (20) de l'évaporateur serpentent sur la surface de la cloison intermédiaire (18).

4. Lave-vaisselle (1) selon l'une des revendications 1 à 3,
**caractérisé en ce que**
les sections de tuyau (20) de l'évaporateur (19) passent intégralement dans la cloison intermédiaire (18).

5. Lave-vaisselle (1) selon la revendication 4,
**caractérisé en ce que**
les sections de tuyau (19) sont intégrées selon la technologie *Roll-Bond* dans la cloison intermédiaire (18).

6. Lave-vaisselle (1) selon l'une des revendications 1 à 3,
**caractérisé en ce que**
les sections de tuyau (20) sont placées sur le côté regardant l'espace de circulation d'eau (17) directement sur la cloison intermédiaire (18).

7. Lave-vaisselle (1) selon la revendication 6,
**caractérisé en ce que**
les sections de tuyau (20) sont placées par le biais d'une technologie *Tube-on-Sheet* sur la cloison intermédiaire (18).

8. Lave-vaisselle (1) selon l'une des revendications précédentes,
**caractérisé en ce que**
l'air du réservoir de lavage (2) peut être conduit par un composant face vers le bas à travers l'espace de circulation d'air (13).

9. Lave-vaisselle (1) selon la revendication 8,
**caractérisé en ce que**
le fluide caloporteur peut être conduit à contre-courant par rapport à l'air par un composant face vers le haut à travers l'évaporateur (19).

10. Lave-vaisselle (1) selon l'une des revendications précédentes,
**caractérisé en ce que**
les cloisons extérieures (25; 26) de la double cuve sont réalisées en matière synthétique.

11. Lave-vaisselle (1) selon l'une des revendications précédentes,
**caractérisé en ce que**
la double cuve (13; 17) présente une épaisseur allant de 2 centimètres à 6 centimètres.

12. Lave-vaisselle (1) selon l'une des revendications précédentes,
**caractérisé en ce que**
la double cuve comprend, en vue du dessus, une forme rectangulaire avec des longueurs d'arêtes entre 30 et 50 centimètres.

13. Lave-vaisselle (1) selon l'une des revendications précédentes,
**caractérisé en ce que**
l'espace de circulation d'air (13) est garni sur son épaisseur de traverses guides (29) essentiellement d'une passe pour la réalisation d'un guidage en serpentin du flux d'air.

14. Lave-vaisselle (1) selon la revendication 13,
**caractérisé en ce que**
les traverses guides (29) sont un constituant monobloc de la cloison extérieure (25) de l'espace de circulation d'air (13).

15. Lave-vaisselle (1) selon l'une des revendications 13 ou 14,
**caractérisé en ce que**
les traverses guides (29) forment lors du fonctionnement des appuis contre le bombage de la cloison intermédiaire (18).
